# EUROPEAN PATENT APPLICATION

(11) **EP 1 724 704 A2**
(43) Date of publication of application: **22.11.2006**
(21) Application number: 06090048.7
(22) Date of filing: 06.04.2006
(51) Int. Cl.: G06K 9/62, G06F 17/18

(54) **Method and system for automatic evaluation of feature relevance**

(30) Priority: 06.04.2005 EP 05090092
(71) Applicant: Fraunhofer-Gesellschaft zur Förderung der angewandten Forschung e.V., 80686 München (DE)
(72) Inventor: Laskov, Pavel, 12555 Berlin (DE); Rieck, Konrad, 12205 Berlin (DE); Schäfer, Christin, 12435 Berlin (DE); Müller, Klaus-Robert, 12159 Berlin (DE)
(74) Representative: Gross, Felix

(57) **Abstract**

The invention is concerned with a method or a system for automatic evaluation of feature relevance in a data (1001), especially such as stored datasets, online signals and / or data stream, characterized by:
a) specification of a feature parametrization (2001) indicative of feature relevance, continuous and differentiable with respect to feature values
b) computation of the relevance score, especially relevance parameters (1003) for each feature with respect to a target function of the inductive analysis by means of one-sided differentials, especially first- and/or higher-order differentials of the target function with respect to the parameters. With this it is possible to classify the data without having á priori information about the classification itself.

## Description

In many data processing applications (e.g. physical, medical, chemical or biological measurement data, economic data, traffic data of IT-systems) the task is to classify data with respect to certain groups (e.g. categories) of interest.

The problem is to classify the data without having á priori information about the classification itself. This can be achieved by applying machine learning tools, which find a dependence in the data based on a limited number of observations. Some of the problems and tools so far used in the field are described in section 1 of Appendix A.

Therefore it is an object of the present invention to provide a method and system for allowing such a classification without prior information. Furthermore, it is an object of the invention to devise a method and a system which allow an assessment of the sensitivity of the model predictions with respect to data features and on automatic evaluation of feature relevance based on this assessment.

This object is solved by a method with the features of claim 1 and a system according to claim 12.

The invention is described in the following be figures depicting certain embodiment.
- Fig. 1: shows an overall flowsheet of an embodiment of the method or system;
- Fig. 2: shows a flowsheet for an unsupervised predictions method or system;
- Fig. 3: shows a flowsheet for a supervised prediction method or system.

The invention itself is also described in three appendices A, B and C.

Appendix A gives an introduction to the mathematical background of the invention.

Appendix B describes the application of the method and system to an example, i.e. the intrusion detection of a component of a computer system.

Appendix C describes the application of the method and system to micro array data from medical data set.

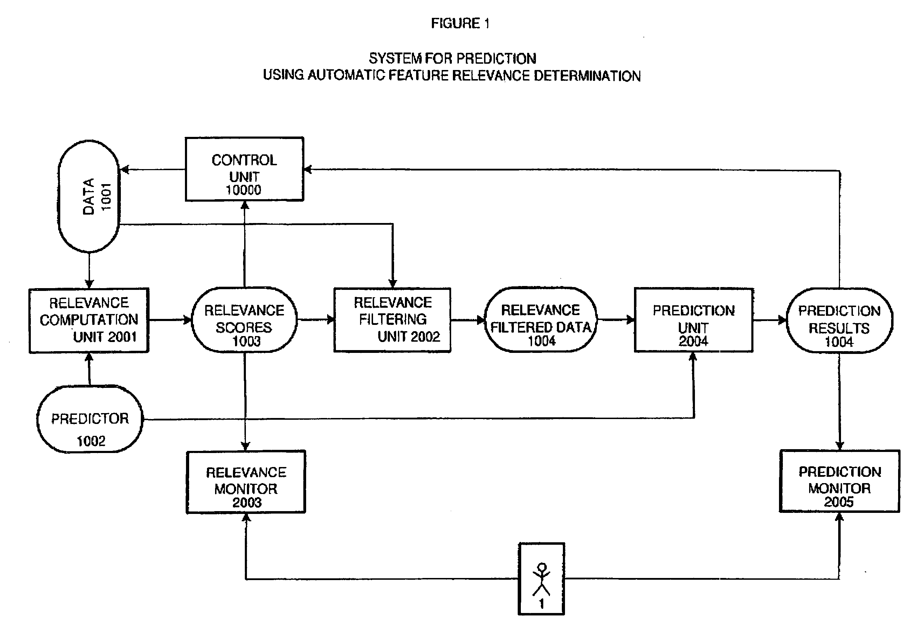

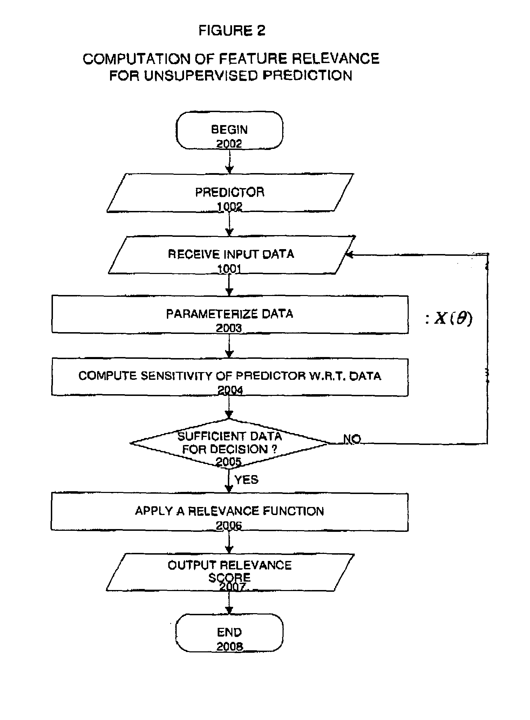

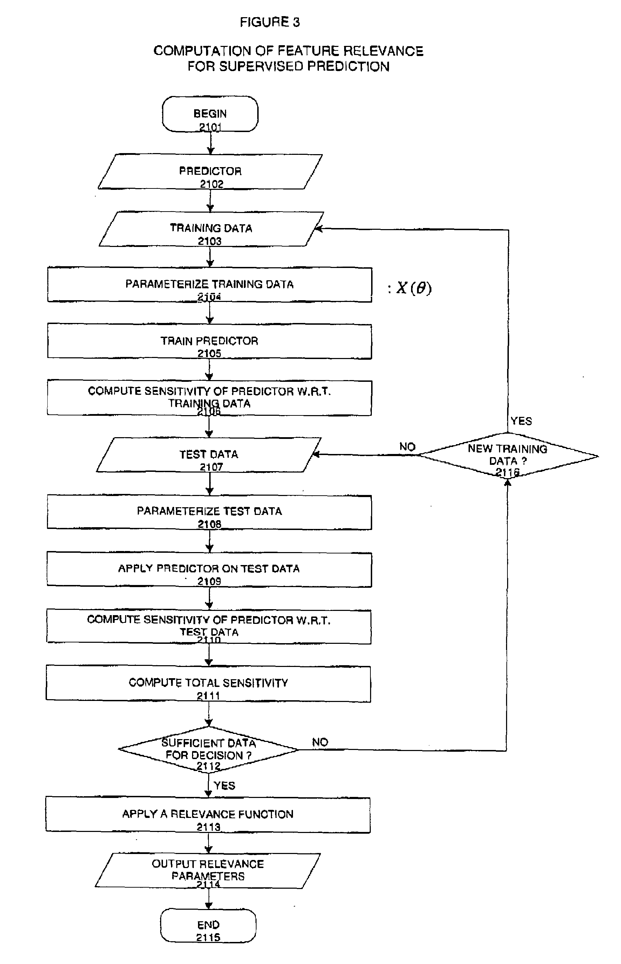

In Fig. 1 the overall flowsheet for an embodiment of the invention is depicted. Before going into the details of the computation of feature relevance (see Fig. 2 and 3 and Appendices) the main components are described in connection with Fig. 1.

Relevance computation unit (2001): receives data 1001 and a predictor 1002 and computes relevance scores or relevance parameters 1003 as will described in the flowcharts of Fig 2 or Fig. 3 for further embodiments of the method. In connection with Section 1 of Appendix A the basic concept of a machine learning process to compute relevance parameters is described.

Relevance filtering unit (2002): applies a previously specified selection function e.g. comparison with a predefined threshold value, to computed relevance parameters 1003 to the data 1001 in order to transform the data in the form that reflects the computed feature relevance. A dataset for relevance filtered data 1004 is automatically generated.

For example, by using the proposed implicit parameterization (see below), the transformation is performed by pointwise multiplying each data vector with the computed vector of relevance parameters.

Relevance monitor (2003): allows a user 1 to observe the computed relevance parameters, e.g. automatically generated datasets are graphically displayed.

Prediction unit (2004): performs prediction using the relevance-filtered data 1004 and the supplied predictor 1002. A dataset for the prediction results 1004 is automatically generated.

Prediction monitor (2005): allows a user 1 to observe prediction results, e.g. automatically generated datasets are graphically displayed. Here feature relevance is visualised by a graphical representation of differentials computed as in one of the claims (see e.g. Figure 1 of section 5 of Appendix B).

Relevance scores or relevance parameters 1003 are computed by computing sensitivity of the prediction function of the machine learning method (e.g. a supervised learning method such as a Support Vector Machine or an unsupervised learning method such as a quarter-sphere Support Vector Machine (see section 3 in Appendix A)) with respect to the data parameterization (as performed in process steps 2003 or 2104).

In one embodiment the relevance score 1003, e.g. the relevance parameters are computed over a fixed number of subsampled datasets with a fixed number of objects of different classes, as described in section 4 of Appendix B.

The relevance parameters 1003 and the prediction results 1004 can be processed further without user interaction.

The relevance parameters 1003 can be indicative of specific parameters of computer network traffic, e.g. IP-addresses, port numbers etc. that can be automatically adjusted by a suitable control unit 10000, e.g. firewall. Therefore a control unit 10000 automatically reacts to the determined feature relvances and decides e.g. if a request from a specific IP-address is allowed or not. The control unit 10000 is not limited to the use of computer network data. In general the control unit 10000 is a computer which automatically reacts to the input of the relevance scores or relevance parameters 1003.

In similar fashion the prediction results 1004 can be read by the control unit 10000 to automatically adjust certain system parameters.

All these units are represented in form of software modules in a computer and / or as hardware modules, e.g. as microprocessors.

In Fig. 2 a first embodiment of the method or system described in Fig. 1 is described. The first embodiment performes a calculation for feature relevance for unsupervised prediction. In Fig. 3 utilises a calculation for feature relevance of supervised prediction. The distincton between those two predictions is described in section 2 of Appendix A.

The method receives a predictor 1002, e.g. a Support Vector Machine (SVM), a quarter-sphere SVM, unsupervised anomaly detectors, a gaussian process (GP) predictor, as it enters the main iteration. Support Vector Machines automatically generate a hyperplane in a feature space which separates objects of different classes, i.e. it returns different values on the input of different classes. The technical background for a predictor 1002 is described in more detail in section 1 of Appendix A.

In the main iteration, the input data 1001 to which a predictor 1002 is to be applied is read. The data 1001 can be measured data from biological sources as the genetic data described in Appendix C. Another example for the source of the data 1001 can be incoming signals measured at network interfaces of a computer system.

The data 1001 is then parameterized using a selected parametrization, e.g. by using an elementwise product of the data matrix X and the parameter vector θ, as explained in section 2 of Appendix A.

Once the parametrization 2003 (see Xₛ(θ) Appendix A) is computed, a sensitivity of prediction with respect to parameters is computed 2004 according to a pre-defined formula (for a given predictor). An example of such formula is described in section 3 of Appendix A in detail.

The sensitivity test is performed to see how sensitive the model predictions are to changes in the data. The measure of sensitivity is the first or second order differentials of the prediction function with respect to the input data 1001.

If sufficient data has been received for a decision on feature relevance, as determined in step 2005, a relevance function 2006, e.g. the high mean / low variance criterion (cf. Figure 2 in Appendix B) is applied to compute the relevance score generated in step 2007 and the calculation of this stage is terminated 2008. Otherwise new data is collected and the process is repeated, i.e. the loop jumps back to the received input data stage 1001.

In Fig. 3 a different embodiment is described, i.e. the computation of feature relevance for supervised prediction.

In one embodiment the goal of inductive analysis is computation of the regression function over the objects in a data stream, i.e. the labels are real values. In case of labels being integer values, the method applies to a classfication problem of supervised learning. The following process steps apply to both cases.

After the start 2101, the method or system receives a predictor 2102, e.g. a Support Vector Machine and enters the main iteration.

In the main iteration, first the training data 2103 is loaded and parameterized according to a specified parametrization 2104.

The predictor 2102 is trained 2105 and its sensitivity with respect to parameters of the training data is computed 2106.

Then the test data 2107 is received and parameterized according to the same pre-defined parameterization 2108. The trained predictor is applied 2109 to the test data 2107, and the sensitivity of the prediction with respect to test data parameterization is computed 2110.

The total sensitivity with respect to parameterization is computed 2111 by combining the sensitivities with respect to the training and test data.

If sufficient data has been received for a decision on feature relevance, as determined in step 2112, a relevance function 2113, e.g. the high mean / low variance criterion (cf. Figure 2 in Appendix B) is applied to compute the relevance score generated in step 2114 and the calculation of this stage is terminated 2115. Otherwise new data is collected and the process is repeated, i.e. the loop jumps back.

## Claims

1. Method for automatic evaluation of feature relevance in a data (1001), especially such as stored datasets, online signals and / or data stream, **characterized by**:
a) specification of a feature parametrization (2001) indicative of feature relevance, continuous and differentiable with respect to feature values
b) computation of the relevance score, especially relevance parameters (1003) for each feature with respect to a target function of the inductive analysis by means of one-sided differentials, especially first- and/or higher-order differentials of the target function with respect to the parameters.

2. Method according to claim 1, where the parametrization is defined as diag(θ) * X, especially multiplication of every dimension in the vectors comprising the data matrix X by a separate parameter θ_{*i*}.

3. Method according to claim 1 or 2, in which the relevance score 1003 is computed over a fixed number of subsampled datasets with a fixed number of objects of different classes.

4. Method according to one of the preceeding claims, **characterized in that** the computation of the relevance parameters (1003) is based on test data (1001) only.

5. Method according to one of the claims 1 to 3, **characterized in that** the computation of the relevance parameters (1003) is based in test data (1001) and training data.

6. Method according to at least one of the preceding claims, especially for visualization, whereby feature relevance is visualised by a graphical representation of differentials computed as in one of the preceding claims.

7. Method according to one of the preceeding claims, **characterized in that** the selection function is computed based on the means and standard deviations of the differentials computed over subsampled datasets as in claim 3.

8. Method according to one of the preceeding claims, **characterized in that** the inductive analysis is directed towards the classification of the objects in a data stream (1001) or in biological, especially in genetic data.

9. Method according to claim 8, **characterising in that** the the classification is performed for the identification of anomalous objects in a data stream (1001) or in biological, especially in genetric data.

10. Method according to at least one preceding claim, where the goal of inductive analysis is the computation of the regression function over the objects in a data stream.

11. Method according to at least one of the preceding claims, comprising a control step performed by a control unit (10000) which automatically reacts to relevance scores or relevance parameters (1003) according to a predefined rule.

12. System for automatic evaluation of feature relevance in a data stream (1001), **characterized by**:
a) means for a specification of the relevance-indicative parametrization (2001), especially of features in a data stream (1001),
b) a relevance unit utilizing one differentials, especially first and/or higher-order differentials of the target function with respect to parametrization,
c) a feature selection unit utilizing a selection function computed over the scores computed by a relevance unit.

13. System according to claim 12, in which the means of a specification of the relevance-indicative parametrization (2001) is constructed as a relevance computation unit (2001).

14. System according to claim 12 or 13, whereby, the specification comprises a feature parametrization (2001) indicative of feature relevance, continuous and differentiable with respect to feature values.

15. System according to one of the claims 12 to 14, comprising means for computation of the relevance score, especially relevance parameters (1003) for each feature with respect to a target function of the inductive analysis by means of one-sided differentials, especially first- and/or higher-order differentials of the target function with respect to the parameters.
